# FASCICULE DE BREVET EUROPEEN

(11) **EP 3 523 882 B1**
(45) Date de publication et mention de la délivrance du brevet: **09.12.2026**
(21) Numéro de dépôt: 17793702.6
(22) Date de dépôt: 06.10.2017
(51) Int. Cl.: H04Q 9/00, H04B 3/60, B66B 5/00, B66B 1/34

(54) **COMMUNICATION ENTRE UNE INSTALLATION D'ASCENSEUR ET UN SERVEUR DISTANT**
KOMMUNIKATION ZWISCHEN EINER AUFZUGSANLAGE UND EINEM ENTFERNTEN SERVER
COMMUNICATION BETWEEN A LIFT INSTALLATION AND A REMOTE SERVER

(30) Priorité: 06.10.2016 FR 1659639
(43) Date de publication de la demande: 14.08.2019
(73) Titulaire: SODIMAS, 26600 Pont-de-l'Isère (FR)
(72) Inventeur: MOGHLALI, Hicham, 26100 Romans sur Isère (FR); REAU, Stéphane, 26000 Valence (FR)
(74) Mandataire: Fédit-Loriot
(86) Numéro de dépôt international: PCT/FR2017/052747
(87) Numéro de publication internationale: WO 2018/065740

(56) Documents cités:
- EP-A1- 2 243 738
- WO-A1-2004/071062
- WO-A1-2015/144974
- GB-A- 2 225 514
- KR-Y1- 200 436 098
- KR-Y1- 200 436 098

## Description

L'invention concerne un procédé de communication entre une installation d'ascenseur et un serveur distant, notamment pour de la surveillance de l'installation d'ascenseur et/ou du contrôle à distance.

Une installation d'ascenseur comprend classiquement un élément linéaire d'entrainement, par exemple un câble ou une courroie, entrainé par un moteur, supportant une cabine et/ou un contrepoids ou masse d'équilibrage.

Il est connu de connecter une installation d'ascenseur à un serveur distant via un modem. En particulier, on peut établir une communication entre une installation d'ascenseur et un nuage (« Cloud » en anglais).

Cette connexion à un serveur distant peut être utilisée pour transmettre des données de mesure issues de capteurs présents dans l'installation d'ascenseur, par exemple un capteur de position, un capteur de vitesse, un capteur de mesure de charge ascenseur, un détecteur de fumée, des capteurs tactiles correspondant chacun à un niveau, ou autre. La collecte de ces données peut permettre notamment de faciliter le diagnostic de l'installation d'ascenseur, d'analyser l'utilisation qui en est faite et d'organiser une maintenance préventive pour éviter les défaillances.

Un contrôle à distance de l'installation d'ascenseur, par exemple une commande à distance d'un redémarrage d'un microcontrôleur gérant les déplacements de la cabine, peut permettre de limiter le nombre de déplacements sur site d'un technicien.

Les installations d'ascenseur sont en général équipées d'une ligne téléphonique, notamment en Europe où la norme EN 81.28 impose une liaison bidirectionnelle entre l'installation d'ascenseur et un service d'intervention.

Il est connu de transmettre des données numériques issues de capteurs de l'installation d'ascenseur vers un modem, afin que ces données soient converties en un signal analogique modulé. La modulation mise en œuvre est en général une modulation par déplacement de fréquence, classiquement une modulation FSK (de l'anglais « Frequency Shift Keying »). Ce signal modulé est transmis sur la ligne torsadée et est reçu par un autre modem installé sur un équipement distant, par exemple un routeur. Le signal reçu est décodé et les données numériques ainsi récupérées peuvent être transmises au serveur distant. On connait notamment le document KR 200 436 098 A1 relatif à un système de surveillance utilisant un signal DTMF pour les équipements d'ascenseur.

Il existe un besoin pour une communication entre installations d'ascenseurs et serveurs distants opérationnelle malgré la disparition annoncée du réseau téléphonique commuté dans certains pays.

Il est envisagé d'équiper chaque installation d'ascenseur d'un convertisseur IP (de l'anglais « Internet Protocol ») et d'une fibre optique. Les données de mesure seraient encapsulées dans des trames IP et transmises sur la fibre optique.

Il existe un besoin pour une communication plus simple à mettre en œuvre.

Il est proposé un procédé de communication entre une installation d'ascenseur et un serveur distant, ladite installation comprenant un moteur, un élément linéaire d'entrainement, au moins un parmi une cabine, un contrepoids et une masse d'équilibrage, au moins un capteur et un dispositif de gestion apte à piloter au moins le moteur de l'installation d'ascenseur, le procédé comprenant
- recevoir des données numériques de mesure issues du au moins un capteur et/ou des données numériques de commande issues du serveur distant et destinées au dispositif de gestion, lesdites données numériques correspondant à une succession d'éléments de données choisis parmi un jeu fini d'éléments de données,
- encoder lesdites données numériques en associant à chaque élément de données une combinaison d'au moins deux fréquences choisies parmi un jeu prédéterminé de fréquences dans la bande de fréquences entre 200 Hz et 3600 Hz, et
- transmettre un signal analogique obtenu en, pour chaque élément de données, générant simultanément au moins deux sinusoïdes correspondant chacune à l'une desdites au moins deux fréquences choisies pour cet élément de données.

Avantageusement, les fréquences du jeu de fréquences peuvent être dans la bande entre 300 Hz et 3400 Hz, par exemple entre 650 Hz et 1650 Hz.

Chacune des fréquences du signal analogique transmis est dans la bande passante de la téléphonie fixe classique. Le signal analogique transmis reste dans le canal voix.

Ce signal peut par exemple être transmis sur une ligne torsadée classique, sur un autre support physique, par exemple sur une fibre optique, ou bien encore par des ondes électromagnétiques. Dans le cas d'une transmission par ondes électromagnétiques, le signal peut être transmis par radiotéléphonie, par exemple par GSM (pour « Global System for Mobile Communications » en anglais), et ce d'autant plus facilement que le signal analogique est dans la bande de fréquences de la voix.

La transmission peut être effectuée de sorte qu'après réception par un équipement distant ou le cas échéant par un équipement au sein de l'installation d'ascenseur, le signal analogique reçu puisse être décodé.

Ainsi, on envoie sur un réseau étendu, par exemple GSM ou autre, des données de mesure ou de commande encodées dans la bande entre 300 Hz et 3400 Hz.

Le procédé décrit ci-dessus peut s'avérer particulièrement intéressant dans le cadre d'un abandon de la téléphonie fixe traditionnelle RTC (pour « réseau téléphonique commuté »). En effet, il peut être relativement facile d'allouer sur une fibre optique, un réseau de radiocommunications ou autre la bande passante correspondant au signal analogique dans la mesure où toutes les fréquences de ce signal sont dans le canal voix, contrairement aux fréquences utilisées dans le cadre d'une modulation FSK comme dans l'art antérieur.

Les données de mesure issues des capteurs ou d'une interface utilisateur et les données de commande à distance sont en général relativement peu volumineuses. Plutôt que d'avoir recours à une modulation FSK à relativement haut débit, comme dans l'art antérieur, ou à une encapsulation dans des trames IP comme envisagé, on peut utiliser un codage sur un petit nombre de fréquences relativement faibles, relativement simple et robuste, permettant ainsi de limiter les pertes de données et de fiabiliser les communications.

Avantageusement, le signal analogique peut être généré de sorte qu'une fréquence d'envoi des éléments de données soit comprise entre 1 Hz et 5 Hz. Dit autrement, à un élément de données correspond une durée comprise entre 200 ms et 1000 ms, avantageusement entre 200 ms et 500 ms.

Cette durée allouée à un élément de donnée peut être consacrée uniquement à l'émission des sinusoïdes correspondantes.

Alternativement, on peut prévoir un temps de latence entre l'émission de deux signaux analogiques correspondant chacun à un élément de données, permettant ainsi de fiabiliser davantage encore la transmission.

Ce temps de latence peut en particulier être supérieur à 100 ms, avantageusement supérieur à 200 ms.

Ainsi, après l'émission de par exemple deux sinusoïdes superposées correspondant par exemple à l'élément de données « 3 », on attend par exemple 150 ms avant d'émettre deux nouvelles sinusoïdes dont les fréquences correspondent à l'élément de données suivant, par exemple « B ».

Pour un élément de données, les au moins deux sinusoïdes correspondantes peuvent être émises pendent une durée comprise par exemple entre 100 ms et 250 ms.

Par exemple, dans le cas d'un signal électrique, le signal analogique peut être généré avec une amplitude comprise entre 100 mV et 500 mV, par exemple entre 200 mV et 360 mV.

L'encodage réalisé implique une combinaison d'un petit nombre de fréquences, par exemple 4, 8 ou 12 fréquences, chacune de ces fréquences étant dans la bande passante de la téléphonie fixe classique.

Le jeu fini d'éléments de données peut par exemple comprendre seulement deux éléments de données, par exemple 0 et 1, ou bien davantage, par exemple quatre éléments de données, représentés par exemple par les lettres A, B, C, D, dix éléments de données, représentés par exemple par les chiffres 0, 1, 2, 3, 4, 5, 6, 7, 8, 9, seize éléments de données, représentés par exemple par les signes 0, 1, 2, 3, 4, 5, 6, 7, 8, 9, *, #, A, B, C, D, vingt-sept éléments de données, trente-six éléments de données, ou autre.

Chaque élément de données peut être encodé en une combinaison de seulement deux fréquences, de trois fréquences, ou davantage.

Dans un mode de réalisation avantageux, le jeu fini d'éléments de données possible peut comprendre seize éléments de données, et chacun de ces éléments de données peut être associé à une combinaison de deux fréquences choisies parmi huit fréquences.

Avantageusement, l'encodage réalisé est un encodage DTMF (de l'anglais « Dual-Tone Multi-Frequency »). Il s'agit d'un système de signalisation analogique défini dans la recommandation U.I.T. Q23, qui permet notamment le codage des touches téléphoniques. Dans une installation d'ascenseur, cet encodage peut aussi être utilisé pour l'adressage en cas d'appel au secours via une alarme de l'ascenseur, comme pour une communication téléphonique classique.

Cet encodage est relativement peu gourmand en bande passante, les fréquences choisies étant entre 697 Hz et 1633 Hz.

En outre, on peut utiliser des dispositifs d'encodage déjà développés et facilement disponibles sur le marché.

Le serveur distant peut faire partie d'un nuage, auquel cas on bénéficie de la souplesse d'utilisation de l'informatique en nuage, ou non.

Le signal analogique encodé est transmis vers le serveur distant ou vers l'installation d'ascenseur.

Le procédé peut ainsi servir pour la collecte de données de mesure, afin de permettre en particulier d'organiser une maintenance préventive de l'installation d'ascenseur.

Le procédé peut aussi être mis en œuvre pour la commande à distance de l'ascenseur. Les données de commande peuvent par exemple comprendre un ordre de redémarrage du dispositif de gestion, ou outre.

Le serveur distant peut avantageusement être agencé pour remplir une base de données, permettant ainsi de faciliter l'interprétation et l'analyse des données de mesure collectées.

Avantageusement, le procédé peut comprendre en outre :
transmettre vers le serveur distant un signal de voix issu d'une alarme de l'installation d'ascenseur.

Ainsi, on peut superposer au signal DTMF un signal de voix, ce signal occupant également relativement peu de bande passante.

Il est en outre proposé un procédé de communication entre une installation d'ascenseur et un serveur distant, ladite installation comprenant un moteur, un élément linéaire d'entrainement, au moins un parmi une cabine, un contrepoids et une masse d'équilibrage, au moins un capteur et un dispositif de gestion apte à piloter au moins le moteur de l'installation d'ascenseur, le procédé comprenant
- recevoir un signal analogique issu du serveur distant ou du au moins un capteur de l'installation d'ascenseur,
- décoder le signal analogique reçu en identifiant à partir dudit signal analogique une succession de combinaisons d'au moins deux fréquences choisies parmi un jeu prédéterminé de fréquences dans la bande entre 200 Hz et 3600 Hz, avantageusement entre 300 Hz et 3400 Hz, et en associant à chaque combinaison un élément de données choisi parmi un nombre fini d'éléments de données, et
- et transmettre des données numérique correspondant à la succession d'éléments de donnés obtenu vers le dispositif de gestion ou vers le serveur distant.

Ce décodage peut être effectué au sein de l'installation d'ascenseur, en particulier dans le cas de réception d'un signal issu du serveur distant, ou à distance, en particulier dans le cas d'une réception d'un signal issu de l'installation d'ascenseur.

Lorsque ce décodage est effectué à distance, le procédé peut comprendre en outre :
- générer à partir des données numériques décodées un message conforme à un protocole de communication, par exemple un protocole IP, et
- transmettre le message généré vers le serveur distant.

En particulier, on peut réaliser une encapsulation des données numériques décodées dans une trame IP.

Les données issues des capteurs peuvent ainsi être transmises via Internet.

Lorsque le décodage décrit-ci-dessus est mis en œuvre au niveau de l'installation d'ascenseur, le procédé peut comprendre en outre :
- transmettre les données numériques décodées vers le dispositif de gestion apte à piloter l'installation d'ascenseur.

Ce dispositif de gestion peut par exemple être intégré à ou comprendre un ou plusieurs processeurs, par exemple un microcontrôleur, un microprocesseur, ou autre.

Il est en outre proposé un produit programme d'ordinateur comprenant des instructions pour effectuer les étapes décrites ci-dessus lorsqu'exécuté par des moyens numériques de traitement, par exemple par un processeur.

Il est en outre proposé un dispositif de communication entre une installation d'ascenseur et un serveur distant, ladite installation comprenant un moteur, un élément linéaire d'entrainement, au moins un parmi une cabine, un contrepoids et une masse d'équilibrage, au moins un capteur et un dispositif de gestion apte à piloter au moins le moteur de l'installation d'ascenseur, le dispositif comprenant
- des moyens de réception de données numériques de mesure issues du au moins un capteur ou de données numériques de commande issues du serveur distant et destinées au dispositif de gestion, lesdites données numériques correspondant à une succession d'éléments de données choisis parmi un jeu fini d'éléments de données,
- des moyens de traitement agencés pour encoder lesdites données numériques en associant à chaque élément de données une combinaison d'au moins deux fréquences choisies parmi un jeu prédéterminé de fréquences dans la bande entre 200 Hz et 3600 Hz, et
- des moyens de transmission pour transmettre un signal analogique obtenu en, pour chaque élément de données, générant simultanément au moins deux sinusoïdes correspondant chacune à l'une desdites au moins deux fréquences choisies pour cet élément de données.

Ce dispositif peut comprendre ou être intégré dans un ou plusieurs processeurs.

Les moyens de réception peuvent par exemple comprendre un port d'entrée, une broche d'entrée, ou autre.

Les moyens de traitement peuvent par exemple comprendre un processeur, un cœur de processeur, ou autre.

Les moyens de transmission peuvent par exemple comprendre un port de sortie, une broche de sortie, un module GSM, ou autre.

Il est en outre proposé un dispositif de communication entre une installation d'ascenseur et un serveur distant, ladite installation comprenant un moteur, un élément linéaire d'entrainement, au moins un parmi une cabine, un contrepoids et une masse d'équilibrage, au moins un capteur et un dispositif de gestion apte à piloter au moins le moteur de l'installation d'ascenseur, le procédé comprenant
- des moyens de réception d'un signal analogique issu du serveur distant ou du au moins un capteur de l'installation d'ascenseur,
- des moyens de traitement agencés pour décoder le signal analogique reçu en identifiant à partir dudit signal analogique une succession de combinaisons d'au moins deux fréquences choisies parmi un jeu prédéterminé de fréquences dans la bande entre 200 hz et 3600 Hz et en associant à chaque combinaison un élément de données choisi parmi un nombre fini d'éléments de données, et
- des moyens de transmission pour transmettre des données numériques correspondant à la succession d'éléments de donnés obtenue vers le dispositif de gestion ou vers le serveur distant.

Les moyens de réception peuvent par exemple comprendre un port d'entrée, une broche d'entrée, ou autre.

Les moyens de traitement peuvent par exemple comprendre un processeur, un cœur de processeur, ou autre.

Les moyens de transmission peuvent par exemple comprendre un port de sortie, une broche de sortie, ou autre.

Il est en outre proposé une installation d'ascenseur comprenant un moteur, un élément linéaire d'entrainement, au moins un parmi une cabine, un contrepoids et une masse d'équilibrage, une interface utilisateur, au moins un capteur et un dispositif de gestion apte à piloter au moins le moteur de l'installation d'ascenseur et l'un au moins des dispositifs de communication décrit ci-dessus.

Il est en outre proposé un système de communication comprenant l'installation décrite ci-dessus ainsi que le serveur distant.

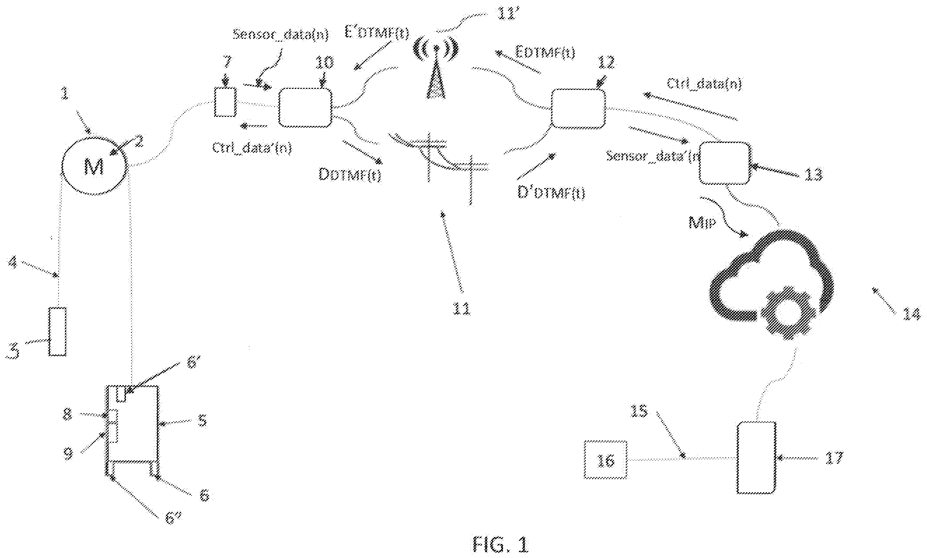

Des modes de réalisation de l'invention sont à présent décrits à titre d'exemples non limitatifs et en référence à la figure 1, laquelle est une vue schématique d'un exemple de système de communication entre une installation d'ascenseur et un serveur distant selon un mode de réalisation de l'invention,
On a représenté à la fig. 1 une installation d'ascenseur 1 comprenant une cabine d'ascenseur 5 susceptible de se déplacer verticalement d'étage en étage dans une gaine (non représentée) d'un bâtiment équipé. La gaine comprend un fond et un plafond.

Un moteur 2 permet d'entrainer en mouvement la cabine 5 et un contrepoids 3, via une courroie 4.

L'installation est équipée de capteurs 6, 6', 6", par exemple un capteur de position 6, un capteur de vitesse 6" et un détecteur de fumée 6'.

Une interface utilisateur est en outre prévue dans la cabine 5, avec un dispositif de saisie à touches 8 comprenant autant de capteurs tactiles que de niveaux desservis, et une alarme 9.

Un dispositif de gestion, ici un microcontrôleur 7 en communication avec les capteurs 6, 6', 6" et avec l'interface utilisateur 8, 9, pilote le moteur ainsi que des actionneurs de portes (non représentés) à chaque niveau, en prenant en compte les signaux issus des capteurs 6, 6', 6". En particulier, le microcontrôleur 7 contrôle la vitesse et la position de la cabine en fonction du niveau souhaité.

Le dispositif de gestion 7 est en communication avec un encodeur/décodeur DTMF 10.

L'encodeur/décodeur DTMF 10 peut par exemple être intégré dans un téléphone fixe non représenté.

Dans un mode de réalisation non représenté, l'encodeur/décodeur DTMF 10 peut être intégré au dispositif de gestion.

Les capteurs 6, 6', 6" permettent de mesurer des données numériques de mesure de valeurs de paramètres physiques, par exemple des valeurs de vitesse v(n), de position x(n), etc. Ces données de mesure sont transmises au microcontrôleur 7.

Le microcontrôleur 7 reçoit aussi des données de mesure des instructions utilisateurs issues des capteurs tactiles 8, par exemple une valeur de niveau à atteindre.

Ces données numériques de mesure sont regroupées en un signal numérique Sensor_data(n) et transmises à l'encodeur/décodeur DTMF 10, lequel génère un signal analogique D_{DTMF}(t) par encodage DTMF de ces données.

Pour un élément de données choisi parmi 0, 1, 2, 3, 4, 5, 6, 7, 8, 9, *, #, A, B, C, D, l'encodeur 10 est agencé pour générer un signal analogique d'une durée de 200 ms environ, et d'amplitude de 320 mV environ, ce signal étant obtenu en superposant deux sinusoïdes de fréquences correspondant à cet élément de données.

Puis l'encodeur 10 ne génère aucun signal pendant 100 ms ou 150 ms. Le signal envoyé est donc nul pendant cette durée.

Ensuite seulement, un nouveau signal analogique d'une durée de 200 ms environ, correspondant à l'élément de données suivant, est généré et transmis.

Les éléments de données sont ainsi transmis après encodage, à une fréquence d'envoi de l'ordre de 3 Hz.

L'utilisation d'un encodage DTMF pour transmettre des données, et non plus simplement à des fins d'adressage comme dans l'art antérieur, permet de connecter l'installation d'ascenseur de façon relativement simple, robuste et bon marché.

Ce signal D_{DTMF}(t) est transmis sur les lignes téléphoniques 11 ou bien par GSM via une antenne 11'.

Si l'utilisateur a recours à l'alarme 9, un signal voix non représenté est également transmis sur le réseau téléphone 11 ou sur le réseau GSM 11'. De façon classique, l'adressage de ce signal voix est effectué via un encodage DTMF.

Un dispositif d'encodage/décodage DTMF 12 reçoit un signal analogique D'_{DTMF}(t) correspondant au signal envoyé D_{DTMF}(t).

Un décodage DTMF est réalisé, et les données numériques Sensor_data'(n) ainsi récupérées sont envoyées par un équipement réseau 13, par exemple un routeur. Cet équipement 13 réalise une encapsulation des données dans une (ou plusieurs) trame IP M_{IP}, et cette trame M_{IP} est envoyée vers le réseau Internet 14.

La trame IP M_{IP} peut ensuite être reçue et traitée par un nuage 15, et les données collectées peuvent enrichir une base de données stockée dans une mémoire 16.

Le nuage 15 comprend des moyens de traitement 17, par exemple un ou plusieurs serveurs, pour écrire ces données dans cette mémoire 16 et pour analyser ces données.

Le serveur 17 peut en particulier générer des messages de commande (non représentés) conformes au protocole IP, et transmettre ces messages sur le réseau Internet 14, avec une adresse de destination correspondant à l'installation 1.

Ces messages sont donc reçus par le routeur 13, lequel extrait de ces messages des données numériques de commande Ctlr_data(n) et transmet ces données à l'encodeur / décodeur DTMF 12.

Cet équipement 12 réalise un encodage DTMF et le signal analogique obtenu E_{DTMF}(t) est envoyé sur le réseau téléphonique 11 ou sur le réseau GSM 11' comme illustré sur la figure.

L'encodeur / décodeur DTMF 10 reçoit le signal analogique E'_{DTMF}(t) et retrouve les données de commande Ctrl_data'(n). Ces données sont ensuite transmises au microcontrôleur 7, lequel pilote l'installation d'ascenseur en conséquence.

## Revendications

1. Procédé de communication entre une installation d'ascenseur (1) et un serveur distant (17), mis en œuvre dans un équipement distant (12) ou, respectivement au sein de l'installation d'ascenseur, ladite installation comprenant un moteur (2), un élément linéaire d'entrainement (4), au moins un parmi une cabine (5), un contrepoids (3) et une masse d'équilibrage, au moins un capteur (6,6',6") et un dispositif de gestion (7) apte à piloter au moins le moteur de l'installation d'ascenseur, le procédé comprenant :
- recevoir dans le dispositif de gestion (7) des données numériques de mesure (Sensor_data(n)) issues du au moins un capteur et destinées au dispositif de gestion (7), et les transmettre à un encodeur / décodeur DTMF (10), lesdites données numériques correspondant à une succession d'éléments de données choisis parmi un jeu fini d'éléments de données ;
- encoder dans l'encodeur / décodeur DTMF (10) lesdites données numériques en associant à chaque élément de données une combinaison d'au moins deux fréquences choisies parmi un jeu prédéterminé de fréquences dans la bande entre 200 Hz-3600 Hz ;
- transmettre depuis l'encodeur / décodeur DTMF (10) vers le serveur distant (17), un signal analogique (D_{DTMF}(t)) obtenu en, pour chaque élément de données, générant simultanément au moins deux sinusoïdes correspondant chacune à l'une desdites au moins deux fréquences choisies pour cet élément de données, la transmission étant effectuée sur un support physique ou par des ondes électromagnétiques ;
- recevoir dans un dispositif d'encodage/décodage DTMF (12) un signal analogique (D'_{DTMF}(t)) issu du au moins un capteur et transmis sur le support physique ou par les ondes électromagnétiques ;
- décoder dans le dispositif d'encodage/décodage DTMF (12) le signal analogique reçu en identifiant à partir dudit signal analogique une succession de combinaisons d'au moins deux fréquences choisies parmi un jeu prédéterminé de fréquences dans la bande entre 200 Hz et 3600 Hz et en associant à chaque combinaison un élément de données choisi parmi un nombre fini d'éléments de données ;
- transmettre, par un équipement réseau (13), vers le serveur distant (17) des données numériques (Sensor_data'(t)) correspondant à la succession d'éléments de données obtenue ;
- générer dans l'équipement réseau (13) à partir des données numériques décodées (Sensor_data'(n)) un message (M_{IP}) conforme au protocole IP en encapsulant lesdites données dans une trame IP, et
- transmettre le message généré dans l'équipement réseau (13) vers le serveur distant (17).

2. Procédé de communication entre une installation d'ascenseur (1) et un serveur distant (17), mis en œuvre dans un équipement distant (12) ou, respectivement au sein de l'installation d'ascenseur, ladite installation comprenant un moteur (2), un élément linéaire d'entrainement (4), au moins un parmi une cabine (5), un contrepoids (3) et une masse d'équilibrage, au moins un capteur (6,6',6") et un dispositif de gestion (7) apte à piloter au moins le moteur de l'installation d'ascenseur, le procédé comprenant :
- génération de messages de commande par le serveur distant (17) conformes au protocole IP et transmission des messages à un équipement réseau (13) via le réseau internet (14) ;
- recevoir dans un dispositif d'encodage/décodage DTMF (12) des données numériques de commande (Ctrl_data(n)) transmises par l'équipement réseau (13) et issues du serveur distant (17), et destinées au dispositif de gestion, lesdites données numériques correspondant à une succession d'éléments de données choisis parmi un jeu fini d'éléments de données ;
- encoder, par le dispositif d'encodage/décodage DTMF (12), lesdites données numériques en associant à chaque élément de données une combinaison d'au moins deux fréquences choisies parmi un jeu prédéterminé de fréquences dans la bande entre 200 Hz-3600 Hz ;
- transmettre depuis le dispositif d'encodage/décodage DTMF (12) vers le dispositif de gestion (7), un signal analogique (E_{DTMF}(t)) obtenu en, pour chaque élément de données, générant simultanément au moins deux sinusoïdes correspondant chacune à l'une desdites au moins deux fréquences choisies pour cet élément de données, la transmission étant effectuée sur un support physique ou par des ondes électromagnétiques ;
- recevoir dans un encodeur/décodeur DTMF (10) un signal analogique (E'_{DTMF}(t)) issu du serveur distant et transmis sur un support physique ou par des ondes électromagnétiques ;
- décoder dans l'encodeur/décodeur DTMF (10) le signal analogique reçu en identifiant à partir dudit signal analogique une succession de combinaisons d'au moins deux fréquences choisies parmi un jeu prédéterminé de fréquences dans la bande entre 200 Hz et 3600 Hz et en associant à chaque combinaison un élément de données choisi parmi un nombre fini d'éléments de données ;
- transmettre depuis l'encodeur/décodeur DTMF (10) vers le dispositif de gestion (7) des données numériques (Ctrl_data'(n)) correspondant à la succession d'éléments de données obtenue.

3. Procédé selon la revendication 1 ou 2, dans lequel l'encodage réalisé est un encodage DTMF (de l'anglais « Dual-Tone Multi-Frequency »).

4. Procédé selon la revendication 1 ou, 1 et 3, comprenant en outre
transmettre vers le serveur distant (17) un signal voix issu d'une alarme (9) de l'installation d'ascenseur.

5. Produit programme d'ordinateur comprenant des instructions pour effectuer les étapes du procédé selon l'une quelconque des revendications 1 à 4 lorsqu'exécuté par des moyens numériques de traitement, par exemple par un processeur.

6. Système de communication entre une installation d'ascenseur (1) et un serveur distant (17), ladite installation comprenant un moteur (2), un élément linéaire d'entrainement (4), au moins un parmi une cabine (5), un contrepoids (3) et une masse d'équilibrage, au moins un capteur (6,6',6") et un dispositif de gestion (7) apte à piloter au moins le moteur de l'installation d'ascenseur, le système comprenant :
- un dispositif de gestion (7) pour recevoir des données numériques de mesure (Sensor_data(n)) issues du au moins un capteur et destinées au dispositif de gestion (7), lesdites données numériques correspondant à une succession d'éléments de données choisis parmi un jeu fini d'éléments de données ;
- un encodeur/décodeur DTMF (10), pour :
- recevoir lesdites données numériques transmises par le dispositif de gestion (7) ;
- encoder lesdites données numériques en associant à chaque élément de données une combinaison d'au moins deux fréquences choisies parmi un jeu prédéterminé de fréquences dans la bande entre 200 Hz-3600 Hz ;
- transmettre vers le serveur distant (17), un signal analogique (D_{DTMF}(t)) obtenu en, pour chaque élément de données, générant simultanément au moins deux sinusoïdes correspondant chacune à l'une desdites au moins deux fréquences choisies pour cet élément de données, la transmission étant effectuée sur un support physique ou par des ondes électromagnétiques ;
- un dispositif d'encodage/décodage DTMF (12) pour recevoir un signal analogique (D'_{DTMF}(t)) issu du au moins un capteur et transmis sur le support physique ou par les ondes électromagnétiques et pour décoder le signal analogique reçu en identifiant à partir dudit signal analogique une succession de combinaisons d'au moins deux fréquences choisies parmi un jeu prédéterminé de fréquences dans la bande entre 200 Hz et 3600 Hz et en associant à chaque combinaison un élément de données choisi parmi un nombre fini d'éléments de données ;
- un équipement réseau (13) pour transmettre vers le serveur distant (17) des données numériques (Sensor_data'(t)) correspondant à la succession d'éléments de données obtenue en générant dans l'équipement réseau (13) à partir des données numériques décodées (Sensor_data'(n)) un message (M_{IP}) conforme au protocole IP en encapsulant lesdites données dans une trame IP, et en transmettant le message généré dans l'équipement réseau (13) vers le serveur distant (17).

7. Système de communication entre une installation d'ascenseur (1) et un serveur distant (17), ladite installation comprenant un moteur (2), un élément linéaire d'entrainement (4), au moins un parmi une cabine (5), un contrepoids (3) et une masse d'équilibrage, au moins un capteur (6,6',6") et un dispositif de gestion (7) apte à piloter au moins le moteur de l'installation d'ascenseur, le serveur distant (17) générant des messages de commande conformes au protocole IP, le système comprenant :
- un équipement réseau (13) apte à recevoir via le réseau internet (14) les messages de commande conformes au protocole IP ;
- un dispositif d'encodage / décodage DTMF (12) pour :
- recevoir des données numériques de commande (Ctrl_data(n)) transmises par l'équipement réseau (13) et issues du serveur distant (17), et destinées au dispositif de gestion, lesdites données numériques correspondant à une succession d'éléments de données choisis parmi un jeu fini d'éléments de données ;
- encoder lesdites données numériques en associant à chaque élément de données une combinaison d'au moins deux fréquences choisies parmi un jeu prédéterminé de fréquences dans la bande entre 200 Hz-3600 Hz ; et,
- transmettre vers le dispositif de gestion (7), un signal analogique (E_{DTMF}(t)) obtenu en, pour chaque élément de données, générant simultanément au moins deux sinusoïdes correspondant chacune à l'une desdites au moins deux fréquences choisies pour cet élément de données, la transmission étant effectuée sur un support physique ou par des ondes électromagnétiques ;
- un encodeur/décodeur DTMF (10) pour :
- recevoir un signal analogique (E'_{DTMF}(t)) issu du serveur distant et transmis sur un support physique ou par des ondes électromagnétiques ;
- décoder le signal analogique reçu en identifiant à partir dudit signal analogique une succession de combinaisons d'au moins deux fréquences choisies parmi un jeu prédéterminé de fréquences dans la bande entre 200 Hz et 3600 Hz et en associant à chaque combinaison un élément de données choisi parmi un nombre fini d'éléments de données ;
- transmettre vers le dispositif de gestion (7) des données numériques (Ctrl_data'(n)) correspondant à la succession d'éléments de données obtenue.

## Patentansprüche

1. Kommunikationsverfahren zwischen einer Aufzugsanlage (1) und einem entfernten Server (17), das in einem entfernten Gerät (12) bzw. innerhalb der Aufzugsanlage implementiert wird, wobei die Anlage einen Motor (2), ein lineares Antriebselement (4), mindestens eines von einer Kabine (5), einem Gegengewicht (3) und einem Auswuchtgewicht, mindestens einen Sensor (6, 6', 6") und eine Verwaltungsvorrichtung (7) umfasst, die in der Lage ist, mindestens den Motor der Aufzugsanlage anzusteuern, wobei das Verfahren umfasst:
- Empfangen digitaler Messdaten (Sensor_data(n)), die von dem mindestens einen Sensor stammen und für die Verwaltungsvorrichtung (7) bestimmt sind, in der Verwaltungsvorrichtung (7), und Übertragen dieser an einen DTMF-Kodierer/Dekodierer (10), wobei die digitalen Daten einer Folge von Datenelementen entsprechen, die aus einem fertigen Satz von Datenelementen ausgewählt sind;
- Kodieren der digitalen Daten in dem DTMF-Kodierer/Dekodierer (10), indem jedem Datenelement eine Kombination aus mindestens zwei Frequenzen zugeordnet wird, die aus einem vorbestimmten Satz von Frequenzen in dem Band zwischen 200 Hz und 3600 Hz ausgewählt werden;
- Übertragen, von dem DTMF-Kodierer/Dekodierer (10) an den entfernten Server (17), eines analogen Signals (D_{DTMF}(t)), das erhalten wird, indem für jedes Datenelement gleichzeitig mindestens zwei Sinuswellen erzeugt werden, die jeweils einer der mindestens zwei für dieses Datenelement ausgewählten Frequenzen entsprechen, wobei die Übertragung über einen physischen Träger oder durch elektromagnetische Wellen erfolgt;
- Empfangen eines analogen Signals (D'_{DTMF}(t)), das von dem mindestens einen Sensor stammt und über den physikalischen Träger oder durch elektromagnetische Wellen übertragen wird, in einer DTMF-Kodier-/Dekodiervorrichtung (12);
- Dekodieren des empfangenen analogen Signals in der DTMF-Kodier-/Dekodiervorrichtung (12), indem aus dem analogen Signal eine Folge von Kombinationen von mindestens zwei Frequenzen identifiziert wird, die aus einem vorbestimmten Satz von Frequenzen in dem Band zwischen 200 Hz und 3600 Hz ausgewählt werden, und indem jeder Kombination ein Datenelement zugeordnet wird, das aus einer endlichen Anzahl von Datenelementen ausgewählt wird;
- Übertragen der digitalen Daten (Sensor_data'(t)), die der Folge der erhaltenen Datenelemente entsprechen, über eine Netzwerkausrüstung (13) an den entfernten Server (17);
- Erzeugen einer Nachricht (M_{IP}) gemäß dem IP-Protokoll in der Netzwerkausrüstung (13) aus den dekodierten digitalen Daten (Sensor_data'(n)), indem die Daten in einen IP-Frame eingekapselt werden, und
- Übertragen der in der Netzwerkausrüstung (13) erzeugten Nachricht an den entfernten Server (17).

2. Kommunikationsverfahren zwischen einer Aufzugsanlage (1) und einem entfernten Server (17), das in einem entfernten Gerät (12) bzw. innerhalb der Aufzugsanlage implementiert wird, wobei die Anlage einen Motor (2), ein lineares Antriebselement (4), mindestens eines von einer Kabine (5), einem Gegengewicht (3) und einem Auswuchtgewicht, mindestens einen Sensor (6, 6', 6") und eine Verwaltungsvorrichtung (7) umfasst, die in der Lage ist, mindestens den Motor der Aufzugsanlage anzusteuern, wobei das Verfahren umfasst:
- Erzeugen von Steuerungsnachrichten durch den entfernten Server (17) gemäß dem IP-Protokoll und Übertragen der Nachrichten an eine Netzwerkausrüstung (13) über das Internetnetz (14);
- Empfangen digitaler Steuerdaten (Ctrl_data(n)), die von der Netzwerkausrüstung (13) übertragen werden und von dem entfernten Server (17) stammen und für die Verwaltungsvorrichtung bestimmt sind, in einer DTMF-Kodier-/Dekodiervorrichtung (12), wobei die digitalen Daten einer Folge von Datenelementen entsprechen, die aus einem fertigen Satz von Datenelementen ausgewählt sind;
- Kodieren der digitalen Daten durch die DTMF-Kodier-/Dekodiervorrichtung (12), indem jedem Datenelement eine Kombination aus mindestens zwei Frequenzen zugeordnet wird, die aus einem vorbestimmten Satz von Frequenzen in dem Band zwischen 200 Hz und 3600 Hz ausgewählt werden;
- Übertragen, von der DTMF-Kodier-/Dekodiervorrichtung (12) an die Verwaltungsvorrichtung (7), eines analogen Signals (E_{DTMF}(t)), das erhalten wird, indem für jedes Datenelement gleichzeitig mindestens zwei Sinuswellen erzeugt werden, die jeweils einer der mindestens zwei für dieses Datenelement ausgewählten Frequenzen entsprechen, wobei die Übertragung über einen physischen Träger oder durch elektromagnetische Wellen erfolgt;
- Empfangen eines analogen Signals (E'_{DTMF}(t)), das von dem entfernten Server stammt und über einen physischen Träger oder durch elektromagnetische Wellen übertragen wird, in einem DTMF-Kodierer/Dekodierer (10);
- Dekodieren des empfangenen analogen Signals in dem DTMF-Kodierer/Dekodierer (10), indem aus dem analogen Signal eine Folge von Kombinationen von mindestens zwei Frequenzen identifiziert wird, die aus einem vorbestimmten Satz von Frequenzen in dem Band zwischen 200 Hz und 3600 Hz ausgewählt werden, und indem jeder Kombination ein Datenelement zugeordnet wird, das aus einer endlichen Anzahl von Datenelementen ausgewählt wird;
- Übertragen, von dem DTMF-Kodierer/Dekodierer (10) an die Verwaltungsvorrichtung (7), der digitalen Daten (Ctrl_data'(n)), die der Folge der erhaltenen Datenelemente entsprechen.

3. Verfahren nach Anspruch 1 oder 2, wobei die durchgeführte Kodierung eine DTMF-Kodierung (aus dem Englischen "Dual-Tone Multi-Frequency") ist.

4. Verfahren nach Anspruch 1 oder 1 und 3, ferner umfassend das Übertragen eines Sprachsignals, das aus einem Alarm (9) der Aufzugsanlage stammt, an den entfernten Server (17).

5. Computerprogrammprodukt, das Anweisungen zum Durchführen der Verfahrensschritte nach einem der Ansprüche 1 bis 4 umfasst, wenn es durch digitale Verarbeitungsmittel, beispielsweise durch einen Prozessor, ausgeführt wird.

6. Kommunikationssystem zwischen einer Aufzugsanlage (1) und einem entfernten Server (17), wobei die Anlage einen Motor (2), ein lineares Antriebselement (4), mindestens eines von einer Kabine (5), einem Gegengewicht (3) und einem Auswuchtgewicht, mindestens einen Sensor (6, 6', 6") und eine Verwaltungsvorrichtung (7) umfasst, die in der Lage ist, mindestens den Motor der Aufzugsanlage anzusteuern, wobei das System umfasst:
- eine Verwaltungsvorrichtung (7) zum Empfangen digitaler Messdaten (Sensor_data(n)), die von dem mindestens einen Sensor stammen und für die Verwaltungsvorrichtung (7) bestimmt sind, wobei die digitalen Daten einer Folge von Datenelementen entsprechen, die aus einem fertigen Satz von Datenelementen ausgewählt sind;
- einen DTMF-Kodierer/Dekodierer (10) zum:
- Empfangen der von der Verwaltungsvorrichtung (7) übertragenen digitalen Daten;
- Kodieren der digitalen Daten, indem jedem Datenelement eine Kombination aus mindestens zwei Frequenzen zugeordnet wird, die aus einem vorbestimmten Satz von Frequenzen in dem Bereich zwischen 200 Hz und 3600 Hz ausgewählt werden;
- Übertragen, an den entfernten Server (17), eines analogen Signals (D_{DTMF}(t)), das erhalten wird, indem für jedes Datenelement gleichzeitig mindestens zwei Sinuswellen erzeugt werden, die jeweils einer der mindestens zwei für dieses Datenelement ausgewählten Frequenzen entsprechen, wobei die Übertragung über einen physischen Träger oder durch elektromagnetische Wellen erfolgt;
- eine DTMF-Kodier-/Dekodiervorrichtung (12) zum Empfangen eines analogen Signals (D'_{DTMF}(t)), das von dem mindestens einen Sensor stammt und über den physikalischen Träger oder durch elektromagnetische Wellen übertragen wird, und zum Dekodieren des empfangenen analogen Signals, indem aus dem analogen Signal eine Folge von Kombinationen von mindestens zwei Frequenzen identifiziert wird, die aus einem vorbestimmten Satz von Frequenzen in dem Band zwischen 200 Hz und 3600 Hz ausgewählt werden, und indem jeder Kombination ein Datenelement zugeordnet wird, das aus einer endlichen Anzahl von Datenelementen ausgewählt wird;
- eine Netzwerkausrüstung (13) zum Übertragen digitaler Daten (Sensor_data'(t)) an den entfernten Server (17), die der Folge von Datenelementen entsprechen, die erhalten werden, indem in der Netzwerkausrüstung (13) aus den dekodierten digitalen Daten (Sensor_data'(n)) eine Nachricht (M_{IP}) gemäß dem IP-Protokoll erzeugt wird, indem die Daten in einen IP-Frame eingekapselt werden und die in der Netzwerkausrüstung (13) erzeugte Nachricht an den entfernten Server (17) übertragen wird.

7. Kommunikationssystem zwischen einer Aufzugsanlage (1) und einem entfernten Server (17), wobei die Anlage einen Motor (2), ein lineares Antriebselement (4), mindestens eines von einer Kabine (5), einem Gegengewicht (3) und einem Auswuchtgewicht, mindestens einen Sensor (6, 6', 6") und eine Verwaltungsvorrichtung (7) umfasst, die in der Lage ist, mindestens den Motor der Aufzugsanlage anzusteuern, wobei der entfernte Server (17) Steuerungsnachrichten gemäß dem IP-Protokoll erzeugt, wobei das System umfasst:
- eine Netzwerkausrüstung (13), die in der Lage ist, über das Internetnetz (14) die Steuernachrichten gemäß dem IP-Protokoll zu empfangen;
- eine DTMF-Kodier-/Dekodiervorrichtung (12) zum:
- Empfangen der digitalen Steuerdaten (Ctrl_data(n)), die von der Netzwerkausrüstung (13) übertragen werden und von dem entfernten Server (17) stammen und für die Verwaltungsvorrichtung bestimmt sind, wobei die digitalen Daten einer Folge von Datenelementen entsprechen, die aus einem fertigen Satz von Datenelementen ausgewählt sind;
- Kodieren der digitalen Daten, indem jedem Datenelement eine Kombination aus mindestens zwei Frequenzen zugeordnet wird, die aus einem vorbestimmten Satz von Frequenzen in dem Bereich zwischen 200 Hz und 3600 Hz ausgewählt werden; und
- Übertragen, an die Verwaltungsvorrichtung (7), eines analogen Signals (E_{DTMF}(t)), das erhalten wird, indem für jedes Datenelement gleichzeitig mindestens zwei Sinuswellen erzeugt werden, die jeweils einer der mindestens zwei für dieses Datenelement ausgewählten Frequenzen entsprechen, wobei die Übertragung über einen physischen Träger oder durch elektromagnetische Wellen erfolgt;
- einen DTMF-Kodierer/Dekodierer (10) zum:
- Empfangen eines analogen Signals (E'_{DTMF}(t)), das von dem entfernten Server stammt und über einen physischen Träger oder durch elektromagnetische Wellen übertragen wird;
- Dekodieren des empfangenen analogen Signals, indem aus dem analogen Signal eine Folge von Kombinationen von mindestens zwei Frequenzen identifiziert wird, die aus einem vorbestimmten Satz von Frequenzen in dem Band zwischen 200 Hz und 3600 Hz ausgewählt werden, und indem jeder Kombination ein Datenelement zugeordnet wird, das aus einer endlichen Anzahl von Datenelementen ausgewählt wird;
- Übertragen der digitalen Daten (Ctrl_data'(n)), die der Folge von erhaltenen Datenelementen entsprechen, an die Verwaltungseinrichtung (7).

## Claims

1. A method for communication between a lift installation (1) and a remote server (17), implemented in a remote equipment (12) or, respectively, within the lift installation, the said lift installation comprising a motor (2), a linear drive member (4), at least one of a car (5), a counterweight (3) and a balancing mass, at least one sensor (6, 6', 6") and a control device (7) configured to control at least the motor of the lift installation, the method comprising:
- receiving in the control device (7) digital measurement data (Sensor_data(n)) originating from at least one sensor and intended for the control device (7) and transmitting said data to a DTMF encoder/decoder (10), said digital data corresponding to a succession of data symbols selected from a finite set of data symbols;
- encoding in the DTMF encoder/decoder (10) said digital data by associating with each data symbol a combination of at least two frequencies selected from a predetermined set of frequencies in the range from 200 Hz to 3600 Hz;
- transmitting, from the DTMF encoder/decoder (10) to the remote server (17) an analog signal (DDTMF(t)) obtained, for each data symbol, by simultaneously generating at least two sinusoids respectively corresponding to said at least two frequencies selected for that data symbol, the transmission being carried out over a physical medium or by electromagnetic waves;
- receiving, in a DTMF encoding/decoding device (12), an analog signal (D'DTMF(t)) originating from the at least one sensor and transmitted over the physical medium or by electromagnetic waves;
- decoding in the DTMF encoding/decoding device (12) the received analog signal by identifying from said analog signal a succession of combinations of at least two frequencies selected from a predetermined set of frequencies in the range from 200 Hz to 3600 Hz and by associating each combination with a data symbol selected from a finite number of data symbols;
- transmitting by network equipment (13) to the remote server (17) digital data (Sensor_data'(t)) corresponding to the obtained succession of data symbols;
- generating in the network equipment (13) from the decoded digital data (Sensor_data'(n)) a message (MIP) compliant with the IP protocol by encapsulating said data in an IP frame; and
- transmitting the generated message from the network equipment (13) to the remote server (17).

2. A method for communication between a lift installation (1) and a remote server (17), implemented in a remote equipment (12) or, respectively within the lift installation, the said lift installation comprising a motor (2), a linear drive member (4), at least one of a car (5), a counterweight (3) and a balancing mass, at least one sensor (6, 6', 6") and a control device (7) configured to control at least the motor of the lift installation, the method comprising:
- generation of command messages by the remote server (17) in accordance with the IP protocol and transmission of the messages to network equipment (13) via the Internet network (14);
- receiving in a DTMF encoding/decoding device (12) digital command data (Ctrl_data(n)) transmitted by the network equipment (13) and originating from the remote server (17) and intended for the control device, said digital data corresponding to a succession of data symbols selected from a finite set of data symbols;
- encoding by the DTMF encoding/decoding device (12) said digital data by associating with each data symbol a combination of at least two frequencies selected from a predetermined set of frequencies in the range from 200 Hz to 3600 Hz;
- transmitting from the DTMF encoding/decoding device (12) to the control device (7), an analog signal (EDTMF(t)) obtained for each data symbol, by simultaneously generating at least two sinusoids respectively corresponding to said at least two frequencies selected for that data symbol, the transmission being carried out over a physical medium or by electromagnetic waves;
- receiving in a DTMF encoder/decoder (10) an analog signal (E'DTMF(t)) originating from the remote server and transmitted over a physical medium or by electromagnetic waves;
- decoding in the DTMF encoder/decoder (10) the received analog signal by identifying from said analog signal a succession of combinations of at least two frequencies selected from a predetermined set of frequencies in the range from 200 Hz to 3600 Hz and by associating each combination with a data symbol selected from a finite number of data symbols; and
- transmitting from the DTMF encoder/decoder (10) to the control device (7) digital data (Ctrl_data'(n)) corresponding to the obtained succession of data symbols.

3. A method according to claim 1 or 2, wherein the encoding performed is a DTMF encoding (Dual-Tone Multi-Frequency).

4. The method according to claim 1, or claims 1 and 3, further comprising, transmitting to the remote server (17) a voice signal originating from an alarm (9) of the lift installation.

5. A computer program product comprising instructions for carrying out the steps of the method according to any one of claims 1 to 4 when executed by digital processing means, for example a processor.

6. A communication system between a lift installation (1) and a remote server (17), the lift installation comprising a motor (2), a linear drive member (4), at least one of a car (5), a counterweight (3) and a balancing mass, at least one sensor (6, 6', 6") and a control device (7) configured to control at least the motor of the lift installation, the system comprising:
- a control device (7) for receiving digital measurement data (Sensor_data(n)) originating from at least one sensor and intended for the control device (7), said digital data corresponding to a succession of data symbols selected from a finite set of data symbols;
- a DTMF encoder/decoder (10) configured to:
- receive said digital data transmitted by the control device (7);
- encode said digital data by associating, with each data symbol, a combination of at least two frequencies selected from a predetermined set of frequencies in the range from 200 Hz to 3600 Hz;
- transmit to the remote server (17) an analog signal (DDTMF(t)) obtained, for each data symbol, by simultaneously generating at least two sinusoids respectively corresponding to said at least two frequencies selected for that data symbol, the transmission being carried out over a physical medium or by electromagnetic waves;
- a DTMF encoding/decoding device (12) configured to receive an analog signal (D'DTMF(t)) originating from the at least one sensor and transmitted over the physical medium or by electromagnetic waves and to decode the received analog signal by identifying from said analog signal a succession of combinations of at least two frequencies selected from a predetermined set of frequencies in the range from 200 Hz to 3600 Hz and by associating each combination with a data symbol selected from a finite number of data symbols;
- a network equipment (13) for transmitting to the remote server (17) digital data (Sensor_data'(t)) corresponding to the obtained succession of data symbols, by generating in the network equipment (13), from decoded digital data (Sensor_data'(n)), an IP protocol-compliant message (MIP), encapsulating said data in an IP frame and transmitting the generated message from the network equipment (13) to the remote server (17).

7. A communication system between a lift installation (1) and a remote server (17), the lift installation comprising a motor (2), a linear drive member (4), at least one of a car (5), a counterweight (3) and a balancing mass, at least one sensor (6, 6', 6") and a control device (7) configured to control at least the motor of the lift installation, the remote server (17) generating command messages compliant with the IP protocol, the system comprising:
- a network equipment (13) configured to receive via the Internet network (14) command messages compliant with the IP protocol;
- a DTMF encoding/decoding device (12) configured to:
- receive digital command data (Ctrl_data(n)) transmitted by the network equipment (13) originating from the remote server (17) and intended for the control device, said digital data corresponding to a succession of data symbols selected from a finite set of data symbols;
- encode said digital data by associating with each data symbol a combination of at least two frequencies selected from a predetermined set of frequencies in the range from 200 Hz to 3600 Hz; and
- transmit to the control device (7) an analog signal (EDTMF(t)) obtained for each data symbol by simultaneously generating at least two sinusoids respectively corresponding to said at least two frequencies selected for that data symbol, the transmission being carried out over a physical medium or by electromagnetic waves;
- a DTMF encoder/decoder (10) configured to:
- receive an analog signal (E'DTMF(t)) originating from the remote server and transmitted over a physical medium or by electromagnetic waves;
- decode the received analog signal by identifying from said analog signal a succession of combinations of at least two frequencies selected from a predetermined set of frequencies in the range from 200 Hz to 3600 Hz and by associating each combination with a data symbol selected from a finite number of data symbols; and
- transmit to the control device (7) digital data (Ctrl_data'(n)) corresponding to the obtained succession of data symbols.
